## Europäisches Patentamt

## European Patent Office

## Office européen des brevets

(19)

(11) Veröffentlichungsnummer: **0 192 100**
**B1**

(12) **EUROPÄISCHE PATENTSCHRIFT**

(45) Veröffentlichungstag der Patentschrift:
**06.04.88**

(21) Anmeldenummer: **86101261.5**

(22) Anmeldetag: **31.01.86**

(51) Int. Cl.⁴: **B 23 K 20/02,** B 23 K 20/22,
B 23 K 20/24

(54) Verfahren zum Vebinden von Bauteilen aus einer Superlegierung.

(30) Priorität: **19.02.85 CH 758/85**

(43) Veröffentlichungstag der Anmeldung:
**27.08.86 Patentblatt 86/35**

(45) Bekanntmachung des Hinweises auf die Patenterteilung:
**06.04.88 Patentblatt 88/14**

(84) Benannte Vertragsstaaten:
**CH DE FR GB IT LI NL SE**

(56) Entgegenhaltungen:
EP-A-0 090 887
GB-A-793 402
US-A-3 667 107
US-A-3 680 197
US-A-3 798 748

(73) Patentinhaber: **BBC Brown Boveri AG, CH- 5401 Baden (CH)**

(72) Erfinder: **Jahnke, Bernd, Dr., Gottlob Kammstrasse 11, D-6903 Neckargemünd (DE)**
Erfinder: **Gessinger, Gernot, Dr., Heigelweg 17, CH- 5413 Birmenstorf (CH)**
Erfinder: **Rydstad, Hans, Dr., Bollstrasse 28, CH- 5413 Birmenstorf (CH)**
Erfinder: **Singer, Robert, Dr., Höhenweg 35, CH- 5417 Untersiggenthal (CH)**

## Beschreibung

Die Erfindung geht aus von einem Verfahren zum Verbinden von Bauteilen aus einer Superlegierung nach der Gattung des Oberbegriffs des Anspruchs 1.

Die stets steigenden Anforderungen an die thermische und mechanische Belastbarkeit von Werkstücken aus Superlegierungen, insbesondere beim Bau hochgezüchteter thermischer Maschinen führen mehr und mehr zu komplizierten und ausgefallenen Formen, welche nur unter grossen Schwierigkeiten oder überhaupt nicht auf Anhieb in einem Stück verwirklicht werden können. Es wird daher nach Lösungsmöglichkeiten gesucht, komplizierte, insbesondere konkave und hohle Formen aufweisende Werkstücke aus mehreren Teilen anzufertigen und letztere auf eine geeignete Art und Weise zu verbinden. Dabei erhebt sich die Forderung nach einem möglichst homogenen, gefügetechnisch gleichmässigen, monolithischen Enderzeugnis, an welchem keinerlei Nähte mehr feststellbar sind und dessen Eigenschaften über alle Querschnitte möglichst gleich sind. Als Verbindungsmethoden bieten sich vor allem diejenigen Verfahren an, bei welchen keine flüssige Phase auftritt, z. B. Diffusionsfügen, Press-Schweissen etc. Derartige Prozesse - auch für andere Werkstoffe als Superlegierungen - sind aus zahlreichen Druckschriften bekannt (vergl. z. B. G.H.Gessinger, Powder Metallurgy of Superalloys, Butterworths, 1984, Kapitel 8.2.1 Diffusion bonding, Seiten 306-312; Holko et al, State-of-technology for joining TD-NiCr sheet, Proc. Second Int. Conference on Superalloys, Processing, MCIC, Seven Springs, Pennsylvania 1972, T-1 - 5-12; John A. Vaccari, Form-bonding titanium in one shot, American Machinist, October 1983, Seiten 91-94; G.Haufler et al, Diffusion bonding of superalloys for gas turbines, COST, Liège 1982, Seiten 1043 - 1050; K.E.Meiners, Development of gas-pressure bonding process for air-cooled turbine blades, Batelle, Columbus Ohio, NASA CR-121090, February 15, 1972, Seiten 61-80).

Aus der US-A-3 798 748 ist ein Diffusions-Schweissverfahren zum Verbinden von Bauteilen aus einer dispersionsgehärteten Nickellegierung bekannt. Dabei werden die zu verbindenden Oberflächen nach vorherigem Reinigen und Polieren während 1h auf der Verbindungstemperatur unter intimem Kontakt gehalten. Abschliessend wird das fertige Werkstück als Ganzes einer Wärmebehandlung zwecks Erzeugung eines Grobkorns unterzogen, wobei die Rekristallisationsfront über die ursprüngliche Verbindungsnaht läuft.

Die in den obigen Druckschriften beschriebenen Prozesse lassen in mancher Hinsicht, insbesondere was ihre beschränkte Reproduzierbarkeit und Abhängigkeit von zahlreichen Faktoren wie Vorgeschichte des Materials, Vorbereitung der zu verbindenden Flächen und Wirtschaftlichkeit sowie Zielgenauigkeit des Ergebnisses zu wünschen übrig. Die Verfahren sind im allgemeinen aufwendig, langsam und kostspielig und für eine rationelle industrielle Fertigung oft nicht besonders geeignet.

Es besteht daher ein Bedürfnis, die bekannten Verfahren zu vereinfachen, zu verbessern und deren zeitlichen Ablauf drastisch zu beschleunigen.

Der Erfindung liegt die Aufgabe zugrunde, ein Verfahren zum Verbinden von Bauteilen aus einer Superlegierung anzugeben, welches bei Wahrung bestmöglicher Einfachheit die Fertigung selbst komplizierter Werkstücke mit homogener Struktur in kurzer Zeit unter Vermeidung aufwendiger Vorrichtungen in möglichst rationeller Art und Weise gewährleistet. Dabei sollen unzulässig hohe Verformungen, welche den Formgebungsablauf des Werkstücks im Verlauf der Fertigung beeinträchtigen, möglichst vermieden werden.

Diese Aufgabe wird durch die in Ansprüche 1, 2 und 5 angegebenen Merkmale gelöst.

Die Erfindung wird anhand der nachfolgenden, durch Figuren näher erläuterten Ausführungsbeispiele beschrieben.

Dabei zeigt:

Fig. 1 einen schematischen Längsschnitt durch ein Werkzeug (Presse) mit eingelegten, zu verbindenden Bauteilen,

Fig. 2 einen schematischen Längsschnitt durch die zu verbindenden Bauteile in zeitlicher Aufeinanderfolge der Verfahrensschritte,

Fig. 3 ein Diagramm der wesentlichen Betriebsparameter des Fügens in Funktion der Zeit,

Fig. 4 ein Diagramm der wesentlichen Betriebsparameter des Fügens in Funktion der Zeit für konstante globale Verformungsgeschwindigkeit,

Fig. 5 einen schematischen Längsschnitt durch ein Werkzeug mit eingelegten, zu verbindenden Bauteilen vor dem Verbinden,

Fig. 6 einen schematischen Querschnitt durch die zu einem Ganzen gefügten Bauteile nach Fig. 5 nach dem Verbinden,

Fig. 7 einen schematischen Längsschnitt durch ein Werkzeug mit eingelegten und gestützten Bauteilen komplizierter Form vor dem Verbinden,

Fig. 8 einen schematischen Längsschnitt durch ein Werkzeug mit zu einem Ganzen gefügten Bauteilen komplizierter Form nach Fig. 7 nach dem Verbinden.

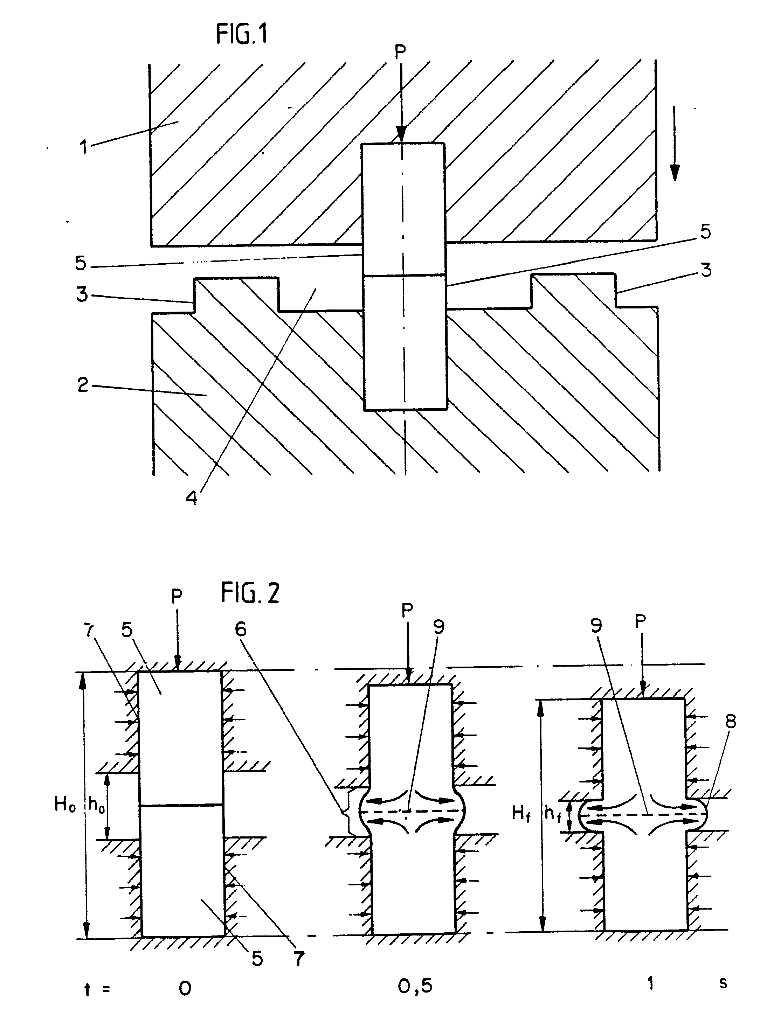

In Fig. 1 ist der Längsschnitt durch ein Werkzeug (Presse) mit eingelegten, zu verbindenden Bauteilen schematisch dargestellt. 1 ist ein Gesenkoberteil, 2 ein Gesenkunterteil in einer mit einer Heizung für die Werkzeuge (nicht gezeichnet!) ausgestalteten Presse. Gesenkoberteil und -unterteil 1 bzw. 2 bestehen vorzugsweise aus einer hochwarmfesten Molybdänlegierung (TZM). Das Gesenkunterteil 2 ist mit Anschlägen 3 für die Begrenzung des Hubes der Presse und mit Aussparungen 4 für den Materialfluss versehen. Selbstverständlich können 3 und 4 auch im Gesenkoberteil 1 oder verteilt in 1 und 2 angebracht werden.

Mit 5 sind die zu verbindenden Bauteile (hier zylindrische oder prismatische Probekörper) bezeichnet. Der Pfeil deutet die unter der Kraft P erfolgende Relativbewegung zwischen Gesenkoberteil 1, und Gesenkunterteil 2 dar. Durch die Werkzeuggeometrie und die Abmessungen der Bauteile 5 werden wesentliche Betriebsparameter des Fügens, insbesondere die Fügezone und der Verformungsgrad weitgehend festgelegt. Es kommt dabei vor allem auf das Verhältnis des im Werkzeug eingespannten zum frei sich bewegenden Teil des Bauteils 5 an.

Fig. 2 zeigt schematisch den Längsschnitt durch die zu verbindenden Bauteile in zeitlicher Aufeinanderfolge der Verfahrensschritte, d. h. vor, während und nach dem eigentlichen Fügeprozess. Im vorliegenden Beispiel handelt es sich um das Verbinden zweier identischer zylindrischer Bauteile 5, welche an ihren Stirnflächen gefügt werden. Ihre totale Höhe vor dem Fügen ist mit $H_0$ bezeichnet. Die entsprechende Fügezone 6 hat vor dem Fügen die Höhe $h_0$. 7 deutet durch Pfeile die seitliche Einspannung an. P stellt die auf das Werkstück wirkende axiale Presskraft dar. Der in der Fügezone 6 bewerkstelligte Materialfluss ist durch seitlich nach aussen gerichtete Pfeile angedeutet. Die ursprünglich sich berührenden Stirnflächen der Bauteile 5 bilden im Verlauf des Fügeprozesses die virtuelle Fügefläche 9. Durch die Stauchung und den seitlichen Materialfluss bildet sich in der Fügezone 6 am Werkstück ein Wulst 8 aus. Die totale Höhe der Bauteile 1 nach dem Fügen ist mit $H_f$ bezeichnet, die verbleibende Höhe der Fügezone 6 mit $h_f$. Der Zeitmaßstab t ist für des vorliegende Beispiel mit 0; 0,5; 1 s angedeutet. Selbstverständlich kann der Zeitmasstab im Rahmen der erfindungsgemässen Begrenzung völlig willkürlich sein. Es gelten folgende Zusammenhänge:

- Globale Verformung:

$$\varepsilon_g = \left| \ln \frac{H_0}{H_f} \right|$$

- Lokale Verformung:

$$\varepsilon_l = \left| \ln \frac{h_0}{h_f} \right| \quad , \text{ mit}$$

$H_0$ = totale Höhe des Werkstücks vor dem Verbinden,
$H_f$ = totale Höhe des Werkstücks nach dem Verbinden,
$h_0$ = Höhe der Fügezone vor dem Verbinden,
$h_f$ = Höhe der Fügezone nach dem Verbinden.

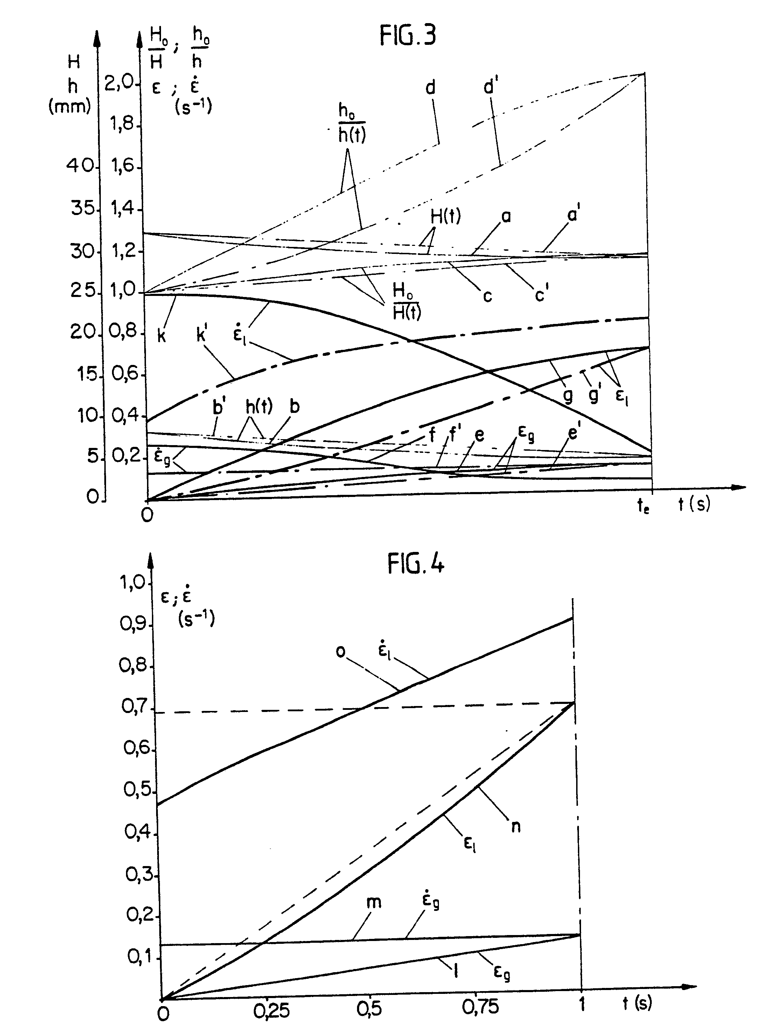

Fig. 3 stellt ein Diagramm der wesentlichen Betriebsparameter des Fügens in Funktion der Zeit dar. Die Abszisse entspricht der Zeitachse t in Sekunden (S). $t_e$ = Ende des Verbindungsschrittes stellt die totale effektive Presszeit (Fügezeit) dar. Auf der Ordinate sind die Höhen H = H(t) und h = h(t) in mm einerseits und die Höhenverhältnisse $\frac{H_0}{H(t)}$ und $\frac{h_0}{h(t)}$ und sowie deren natürliche Logarithmen $\varepsilon_g$ und $\varepsilon_1$ und ihre Ableitungen nach der Zeit t

$$\dot{\varepsilon}_g = \frac{d \left| \ln \frac{H_0}{H(t)} \right|}{dt} \quad \text{und}$$

$$\dot{\varepsilon}_l = \frac{d \left| \ln \frac{h_0}{h(t)} \right|}{dt} \quad \text{in } s^{-1}$$

andererseits dargestellt.

Die Bedeutung der einzelnen Kurven a bis k' ergibt sich aus der nachfolgenden Zusammenstellung:

a     Totale Höhe des Werkstücks in Funktion der Presszeit t für konventionelle, ungesteuerte Presse

a'    Totale Höhe des Werkstücks in Funktion der Presszeit für Presse mit konstanter Stempelgeschwindigkeit

b     Höhe der Fügezone in Funktion der Presszeit t für konventionelle, ungesteuerte Presse

b'    Höhe der Fügezone in Funktion der Presszeit t für Presse mit konstanter Stempelgeschwindigkeit

c     Ho/H(t) in Funktion der Presszeit t für konventionelle, ungesteuerte Presse

c' Ho/H(t) in Funktion der Presszeit für Presse mit konstanter Stempelgeschwindigkeit

d     ho/h(t) in Funktion der Presszeit t für konventionelle, ungesteuerte Presse

d'    ho/h(t) in Funktion der Presszeit t für Presse mit konstanter Stempelgeschwindigkeit

e     $\varepsilon_g$ = globale Verformung des Werkstücks in Funktion der Presszeit t für konventionelle, ungesteuerte Presse

e'    $\varepsilon_g$ = globale Verformung des Werkstücks in Funktion der Presszeit t für Presse mit konstanter

Stempelgeschwindigkeit

f  $\dot{\varepsilon}_g$ = globale Verformungsgeschwindigkeit des Werkstücks in Funktion der Presszeit t für konventionelle, ungesteuerte Presse

f'  $\dot{\varepsilon}_g$ = globale Verformungsgeschwindigkeit des Werkstücks in Funktion der Presszeit t für Presse mit konstanter Stempelgeschwindigkeit

g  $\varepsilon_1$ = lokale Verformung der Fügezone in Funktion der Presszeit t für konventionelle, ungesteuerte Presse

g'  $\varepsilon_1$ = lokale Verformung der Fügezone in Funktion der Presszeit t für Presse mit konstanter Stempelgeschwindigkeit

k  $\dot{\varepsilon}_1$ = lokale Verformungsgeschwindigkeit der Fügezone in Funktion der Presszeit t für konventionelle, ungesteuerte Presse

k'  $\dot{\varepsilon}_1$ = lokale Verformungsgeschwindigkeit der Fügezone in Funktion der Presszeit t für Presse mit konstanter Stempelgeschwindigkeit

Im Falle der ungesteuerten Presse nimmt im allgemeinen die Verformungsgeschwindigkeit gegen das Ende des Presshubes zufolge Anwachsens des Verformungswiderstandes ab (siehe Kurve k für $\dot{\varepsilon}_1$). Bei der auf konstante Stempelgeschwindigkeit gesteuerten Presse ist es gerade umgekehrt: Die Verformungsgeschwindigkeit nimmt im Verlauf des Presshubes zu (siehe Kurve k' für $\dot{\varepsilon}_1$). Für die metallurgischen Eigenschaften des Werkstücks sind die lokalen Verhältnisse in der Fügezone 6 massgebend. Wie das Diagramm zeigt, weichen sie im allgemeinen beträchtlich von den aus den geometrischen Daten der Presse errechneten globalen Werten ab.

In Fig. 4 ist ein Diagramm der wesentlichen Betriebsparameter des Fügens in Funktion der Zeit für konstante globale Verformungsgeschwindigkeit dargestellt. Die Bezeichnungen entsprechen denjenigen, die unter Fig. 3 definiert sind.

Die Bedeutung der einzelnen Kurven 1 bis o ergibt sich aus der nachfolgenden Zusammenstellung:

l  $\varepsilon_g$ = globale Verformung des Werkstücks in Funktion der Presszeit t für gesteuerte Presse mit konstanter Verformungsgeschwindigkeit $\dot{\varepsilon}_g$

m  $\dot{\varepsilon}_g$ = globale konstante Verformungsgeschwindigkeit

n  $\varepsilon_1$ = lokale Verformung der Fügezone in Funktion der Presszeit für gesteuerte Presse mit konstanter Verformungsgeschwindigkeit $\dot{\varepsilon}_g$

o  $\dot{\varepsilon}_1$ = lokale Verformungsgeschwindigkeit der Fügezone in Funktion der Presszeit für gesteuerte Presse mit konstanter Verformungsgeschwindigkeit $\dot{\varepsilon}_g$

Bei programmgesteuerter Konstanthaltung der globalen Verformungsgeschwindigkeit (Gerade m für $\dot{\varepsilon}_g$), was sich durch Rückwärtsrechnen aus den geometrischen Abmessungen von Werkstück und Werkzeug bestimmen lässt, ergibt sich im vorliegenden Beispiel ein leichter Anstieg für den Verlauf der lokalen Verformungsgeschwindigkeit (Kurve o für $\dot{\varepsilon}_1$). Die Mittelwerte sind durch gestrichelte Geraden angedeutet.

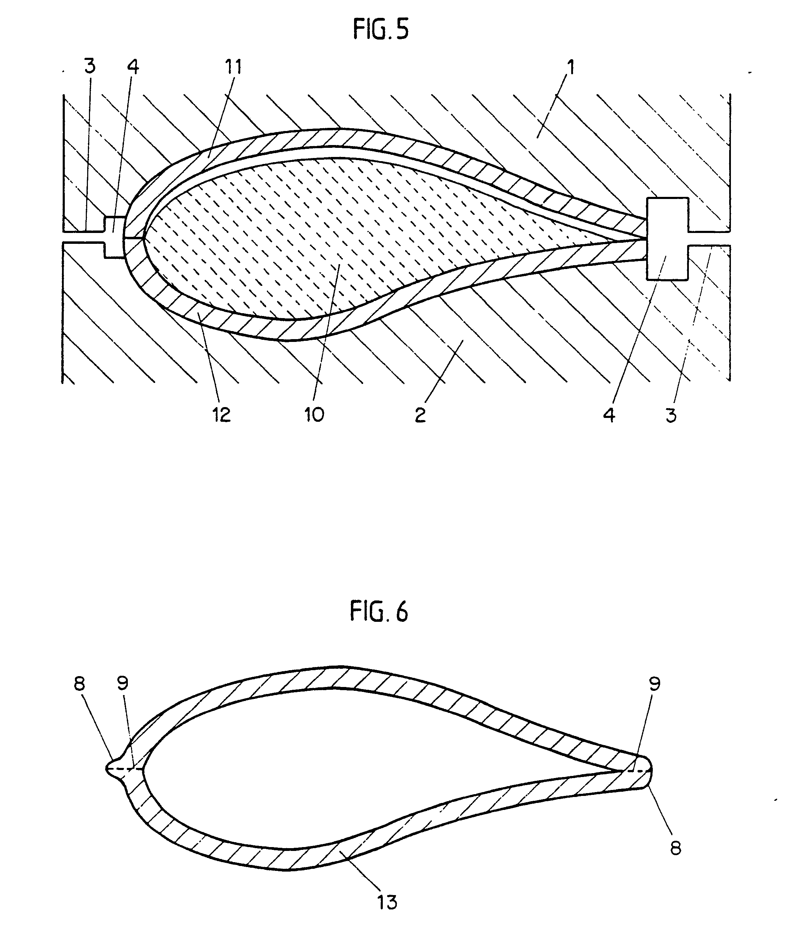

Die Fig. 5 zeigt schematisch einen Längsschnitt durch ein Werkzeug mit eingelegten, zu verbindenden Bauteilen vor dem Verbinden. Es handelt sich hier um im Profil (Querschnitt) dargestellte Teile einer Gasturbinenschaufel. 11 ist eine Schaufelhalbschale, Oberteil, während 12 das zugehörige Unterteil bedeutet. Dazwischen liegt ein Stützkörper (Stützmasse) 10, welche zum Beispiel aus keramischem Material oder einer geeigneten metallischen Substanz bestehen kann. Der Stützkörper 10 dient dazu, unzulässige Verformungen der ausserhalb der Fügezone des Werkstücks liegenden Partien während des Fügeprozesses zu unterbinden. Derartige Stützkörper 10 werden mit Vorteil bei dünnwandigen zu verbindenden Bauteilen eingesetzt. Sie können nach dem Fügen auf chemische Weise durch Auslaugen oder durch Ausschmelzen wieder entfernt werden. Im Falle eines metallischen Stützkörpers 10 muss sein Schmelzpunkt oberhalb der Fügetemperatur, jedoch unterhalb der Solidustemperatur des Werkstücks liegen.

In Fig. 6 ist schematisch ein Querschnitt durch die zu einem Ganzen gefügten Bauteile nach Fig. 5 nach dem Verbinden dargestellt. Das monolithische Werkstück 13 nach dem Fügen stellt das als Hohlkörper ausgeführte Blatt einer Gasturbinenschaufel dar. 9 ist die am Gefüge nicht mehr feststellbare Fügefläche. 8 entspricht je einem Wulst an der Schaufeleintritts- bzw. Austrittskannte. Der Stützkörper 10 (vergl. Fig. 5) ist entfernt worden.

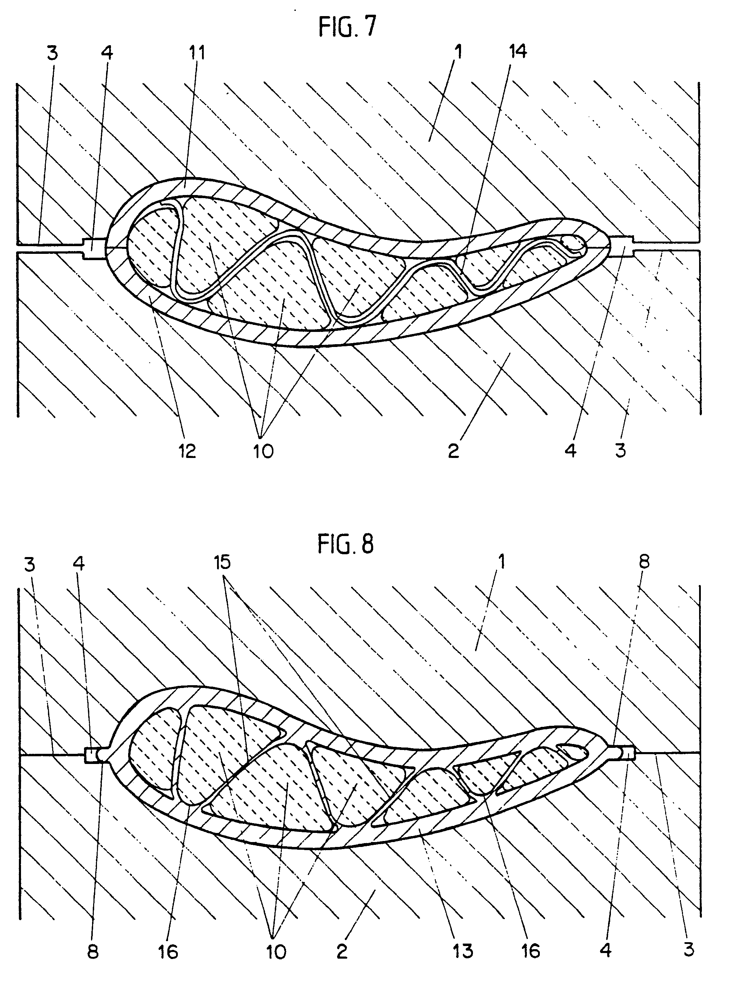

Fig. 7 zeigt schematisch einen Längsschnitt durch ein Werkzeug mit eingelegten und gestützten, zu verbindenden Bauteilen komplizierter Form vor dem Verbinden. Ähnlich Fig. 5 handelt es sich hier um im Profil (Querschnitt) dargestellte Teile einer Gasturbinenschaufel. Die Bezugszeichen 1, 2, 3, 4, 10, 11, 12 entsprechen genau denjenigen der Fig. 5. Der Stützkörper (Stützmasse) 10 ist hier mehrteilig ausgeführt, um den Blecheinsatz 14 wirksam stützen zu können. 10, 11, 12 und 14 sind in der Form derart aufeinander abgestimmt, dass die Verformung beim Pressen praktisch nur in den zu verbindenden Abschnitten (Fügezone) erfolgen kann.

Fig. 8 zeigt schematisch einen Längsschnitt durch ein Werkzeug mit zu einem Ganzen gefügten Bauteilen komplizierter Form nach Fig. 7 nach dem Verbinden. Die aus dem ursprünglichen Blecheinsatz 14 (vergl. Fig. 7) entstandenen Stege 15 sind an den Verbindungsstellen Steg/Halbschale 16 fest mit dem übrigen Werkstück 13 (ehemalige Halbschalen 11 bzw. 12) verbunden. Die übrigen Bezugszeichen entsprechen genau denjenigen der Figuren 6 und 7.

**Ausführungsbeispiel I:**

Siehe Figuren 1, 2 und 4!

Es wurden zwei gleiche zylindrische Probekörper als Bauteile 5 nach dem Pressfügeverfahren stirnseitig verbunden. Die Bauteile 5 hatten je folgende Abmessungen:

Durchmesser = 10 mm
Höhe = 16 mm $(= \frac{H_0}{2})$

Der verwendete Werkstoff mit der Markenbezeichnung MA 6000 (INCO) war eine dispersionsgehärtete Nickelbasis-Superlegierung im feinkörnigen Gefügezustand und hatte die nachfolgende Zusammensetzung:

Cr = 15 Gew.-%
W = 4,0 Gew.-%
Mo = 2,0 Gew.-%
Al = 4,5 Gew.-%
Ti = 2,5 Gew.-%
Ta = 2,0 Gew.-%
C = 0,05 Gew.-%
B = 0,01 Gew.-%
Zr = 0,15 Gew.-%
$Y_2O_3$ = 1,1 Gew.-%
Ni = Rest

Die zuvor stirnseitig geschliffenen und gereinigten Bauteile 5 wurden auf eine Fügetemperatur von 980°C gebracht und in das aus einem Gesenkoberteil 1 und einem Gesenkunterteil 2 bestehende beheizte Werkzeug eingesetzt. Werkzeug und Werkstück befanden sich in einer Argonatmosphäre. Dabei war der zylindrische Körper je auf einer Länge von 12 mm seitlich eingespannt, während die restlichen 4 mm sich in der Aussparung 4 frei bewegen konnten.

Unter dem Einfluss der Presskraft P wurden die Bauteile 5 axial gestaucht und gefügt. Der lokale Materialfluss ist in Fig. 2 durch Pfeile angedeutet. Die Fügezone 6 nach dem Verbinden hatte noch eine Höhe $h_f$ von 4 mm.

Die Betriebsparameter des Fügens stellten sich wie folgt:

Die Presse wurde derart gesteuert, dass die globale Verformungsgeschwindigkeit $\dot{\varepsilon}_g$ konstant gehalten wurde.

$\varepsilon_g$ = 0,13
$\dot{\varepsilon}$ = 0,13 s$^{-1}$ konstant (Kurve m in Fig. 4)
$\varepsilon_1$ = 0,69
$\dot{\varepsilon}$ = 0,69 s$^{-1}$ (Mittelwert)
$\Delta t$ = 1 s (totale effektive Fügezeit)

Nach dem Fügen wurde das Werkstück abgekühlt und daraufhin einer Wärmebehandlung unterworfen. Diese bestand in einem Glühen auf Grobkorn während 1h bei einer Temperatur von 1200°C. Am Schluss wurde das Werkstück in Luft abgekühlt. Es konnte festgestellt werden, dass die Rekristallisationsfront über die ursprüngliche Fügefläche 9 hinweggewandert war und letztere nicht mehr erkennbar war. Aus dem fertigen Werkstück wurden Proben herausgearbeitet und die mechanischen Fertigkeitswerte bei Raumtemperatur und bei erhöhter Temperatur untersucht. Sowohl die Warmstreckgrenze wie die Dauerfestigkeit standen dem entsprechenden nicht gefügten Werkstoff mit vergleichbarer Gefügeausbildung nicht nach. Es wurde 100 % Nahteffektivität erzielt.

**Ausführungsbeispiel II:**

Siehe Figuren 1, 2 und 3!

Zwei gleiche zylindrische Probekörper als Bauteile 5 wurden ähnlich Beispiel 1 stirnseitig gefügt. Die Bauteile 5 hatten je folgende Abmessungen:

Durchmesser = 17 mm
Höhe = 14 mm $(= \frac{H_0}{2})$

Der Werkstoff war eine dispersionsgehärtete Nickelbasis-Superlegierung mit der Markenbezeichnung MA 754 (INCO) und hatte folgende Zusammensetzung:

$$Cr = 20 \text{ Gew.-\%}$$
$$C = 0,05 \text{ Gew.-\%}$$
$$Al = 0,3 \text{ Gew.-\%}$$
$$Ti = 0,5 \text{ Gew.-\%}$$
$$Fe = 1,0 \text{ Gew.-\%}$$
$$Y_2O_3 = 1,0 \text{ Gew.-\%}$$
$$Ni = \text{Rest}$$

Die Bauteile 5 wurden mit gereinigten Oberflächen auf eine Fügetemperatur von 850°C gebracht und in das beheizte Werkzeug eingeführt. Es wurde unter Schutzgasatmosphäre (Argon) gearbeitet. Die Höhe $h_o$ der Fügezone 6 vor dem Verbinden betrug 7,6 mm. Die Höhe $h_f$ der Fügezone 6 nach erfolgter Verbindung betrug noch 3,6 mm. Die Betriebsparameter des Fügens ergaben sich wie folgt:

Die Presse wurde derart gesteuert, dass die Stempelgeschwindigkeit ungefähr konstant war.

$$\varepsilon_g = 0,15$$
$$\dot{\varepsilon}_g \approx 0,3 \text{ s}^{-1}, \text{ annähernd konstant (Kurve f' in Fig. 3)}$$
$$\varepsilon_1 = 0,74$$
$$\dot{\varepsilon}_1 = 1,48 \text{ s}^{-1} \text{ (Mittelwert)}$$
$$\Delta t = 0,5 \text{ s (totale effektive Fügezeit)}$$

Nach dem Fügen und dem Abkühlen wurde das Werkstück einer Grobkornglühung während 1 h bei einer Temperatur von 1315°C und einer letzten Abkühlung in Luft unterworfen. Die mechanische Prüfung ergab 100 % Nahteffektivität.

**Ausführungsbeispiel III:**

Siehe Figuren 5 und 6!

Als Bauteile wurden Teile einer hohlen Turbinenschaufel verwendet. Die Schaufelhalbschalen (Oberteil 11, Unterteil 12) hatten in halber Höhe des Schaufelblattes folgende Querschnittsabmessungen:

|                                 | Oberteil | Unterteil |
|---------------------------------|----------|-----------|
| Breite:                         | 100 mm   | 100 mm    |
| max. Tiefe (aussen gemessen):   | 21 mm    | 20 mm     |
| Wandstärke:                     | 4 mm     | 4 mm      |

In die Halbschalen wurde ein Stützkörper 10 aus keramischer Masse eingelegt, dessen Konturen genau der Hohlform der fertigen Schaufel entsprach. Der für das Pressfügen verfügbare Spalt zwischen der Halbschale 11 und dem Stützkörper 10 betrug - einseitig gemessen - ca. 2 mm.

Der Werkstoff der Schaufelhalbschalen 10 und 11 war die in Beispiel I angegebene Superlegierung MA 6000.

Die Halbschalen 11 und 12 mit dem eingeschlossenen Stützkörper 10 wurden unter Argonatmosphäre auf eine Temperatur von 950°C gebracht und gemäss Fig. 5 in das Werkzeug (1, 2) eingelegt.

Die Betriebsparameter ergaben sich wie folgt (Vergl. Fig. 2):

$$H_o = 41 \text{ mm}$$
$$H_f = 39 \text{ mm}$$
$$h_o = 8 \text{ mm}$$
$$h_f = 6 \text{ mm}$$
$$\varepsilon_g = 0,05$$
$$\dot{\varepsilon}_g = 0,005 \text{ s}^{-1} = \text{konstant}$$
$$\varepsilon_1 = 0,285$$
$$\dot{\varepsilon}_1 = 0,0285 \text{ s}^{-1} \text{ (Mittelwert)}$$
$$\Delta t = 10 \text{ s}$$

Nach dem Fügen hatte das Werkstück die Gestalt gemäss Fig. 6 mit den charakteristischen Wulsten 8. Nach dem Abkühlen und chemischen Auslaugen des Stützkörpers 10 wurde eine Wärmebehandlung zwecks Einstellung eines Grobkorns durch Zonenglühen durchgeführt. Die metallographische Untersuchung ergab, dass die ursprüngliche Fügefläche 9 anhand des Korngefüges nicht mehr festgestellt werden konnte. Die Kristallite hatten durchschnittlich eine Breite von 2 mm bei einer Dicke von 1,5 mm und eine Länge von 10 mm. Die Festigkeitswerte des ungefügten Werkstoffs gleicher Gefügeausbildung wurden durchwegs erreicht.

**Ausführungsbeispiel IV:**

Siehe Figuren 7 und 8!

Die zu fügenden Bauteile waren Teile einer hohlen, im Innern mehrere Kanäle und Versteifungsrippen aufweisenden Turbinenschaufel. Die Schaufelhalbschalen (Oberteil 11, Unterteil 12) hatten in halber Höhe des Schaufelblattes die nachfolgenden Querschnittsabmessungen:

|  | Oberteil | Unterteil |
|---|---|---|
| Breite: | 60 mm | 60 mm |
| max. Tiefe (aussen gemessen): | 10 mm | 12 mm |
| Wandstärke: | 2,4 mm | 2,4 mm |

Der zur Verstärkung dienende Blecheinsatz 14 war wellenförmig ausgebildet und hatte eine Wandstärke von 0,8 mm. Zwischen die Halbschalen und den Blecheinsatz 14 wurde eine keramische Stützmasse 10 eingelegt, deren Konturen den Kanalformen der fertigen Schaufel entsprachen. Der für das Fügen verfügbare Spalt zwischen den Halbschalen 11 und 12 und dem Blecheinsatz 14 einerseits und der Stützmasse 10 andererseits betrug - einseitig gemessen - ca. 0,9 mm.

Als Werkstoff für die Schaufelhalbschalen 11 und 12 wie für den Blecheinsatz 14 wurde die in Beispiel II angegebene Superlegierung MA 754 gewählt.

Das gesamte, aus den Halbschalen 11 und 12, dem Blecheinsatz 14 und der Stützmasse 10 bestehende Paket wurde unter Argonatmosphäre auf eine Temperatur von 870°C gebracht und gemäss Fig. 7 in das Werkzeug (1, 2) eingelegt.

Die Betriebsparameter für das Pressfügen ergaben sich wie folgt (Vergl. Fig. 2):

Die Presse wurde auf ungefähr konstante Stempelgeschwindigkeit gesteuert.

$H_o$ = 20 mm
$H_f$ = 19,1 mm
$h_o$ = 2,5 mm
$h_f$ = 1,6 mm
$\varepsilon_g$ = 0,05
$\dot{\varepsilon}_g$ ≈ 0,02 s$^{-1}$, annähernd konstant
$\varepsilon_1$ = 0,445
$\dot{\varepsilon}_1$ = 0,178 s$^{-1}$ (Mittelwert)
$\Delta t$ = 2,5 s

Die Gestalt des Werkstücks nach dem Fügen entsprach der Fig. 8. Ausser der durch Wulste 8 gekennzeichneten Vorder- und Hinterkante des Schaufelblattes wies letzteres die Verbindungsstellen Steg/Halbschale 16 und die versteifenden Stege 15 auf. Das keramische Material der Stützmasse 10 wurde nun mit chemischen Mitteln herausgelaugt und das Werkstück einer Wärmebehandlung zwecks Einstellung eines Grobkorns durch isothermes Glühen ähnlich Beispiel III unterworfen. Die mechanische Prüfung ergab 100 % Nahteffektivität.

**Ausführungsbeispiel V:**

Siehe Fig. 1 und 2!

Aus einer Superlegierung mit der Handelsbezeichnung "Waspaloy" wurden zylindrische Probekörper als Bauteile 5 angefertigt. Die Bauteile hatten folgende Abmessungen:

Durchmesser = 10 mm
Höhe = 16 mm ($= \frac{H_o}{2}$)

Der Werkstoff hatte die nachfolgende Zusammensetzung:

C = 0,03 Gew.-%
Cr = 19,5 Gew.-%
Mo = 4,5 Gew.-%
Co = 14,0 Gew.-%
Ti = 3,0 Gew.-%
Al = 1,4 Gew.-%
Fe = 2,0 Gew.-%
Ni = Rest

Die Stirnseiten der Bauteile 5 wurden zunächst mit einer BN-Partikel enthaltenden Schleifscheibe geschliffen, im Ultraschallbad (Wasser + Alkohol) gereinigt, entfettet und in Freon aufbewahrt. Statt Freon kann auch Azeton benützt werden. Vor dem Versuch wurden die Bauteile unter leichtem Druck angewärmt, in das Werkzeug eingesetzt und das Ganze mit Argon geflutet. Der zylindrische Körper eines jeden Bauteils 5 war je auf einer Länge von 10 mm seitlich eingespannt, während die restlichen vorstehenden 6 mm sich in der Aussparung 4 frei bewegen konnten. Unter dem Einfluss der axial wirkenden Presskraft P wurden die Bauteile 5 um je 4 mm gestaucht und gleichzeitig an ihren Stirnflächen gefügt. Die Geometrie ergab sich wie folgt:

$H_o$ = 32 mm
$H_f$ = 24 mm
$h_o$ = 12 mm
$h_f$ = 4 mm

Die Betriebsparameter des Fügens waren: Konstante Stempelgeschwindigkeit von 0,285 mm/s:

$\varepsilon_g$ = 0,285
$\dot{\varepsilon}_g$ ≈ 0,02 s$^{-1}$, (Mittelwert)
$\varepsilon_1$ = 1,1
$\dot{\varepsilon}_1$ ≈ 0,05 s$^{-1}$ (Mittelwert)
$\Delta t$ = 14 s (effektive Fügezeit)
$T$ = 1150°C (Fügetemperatur)

Nach Beendigung des Stempelhubes wurde das gefügte Werkstück noch während weiterer 2 min Haltezeit unter dem sich am Ende einstellenden Druck belassen, dann aus dem Werkzeug herausgenommen, abgekühlt und einer weiteren Wärmebehandlung unterworfen. Diese bestand in einem Grobkornglühen während 1 h bei 1150°C. Daraufhin wurde das Werkstück in Luft abgekühlt und geprüft.

Die zu fügenden Oberflächen der Bauteile 5 werden zunächst ganz allgemein mechanisch, chemisch oder elektrolytisch bearbeitet und gereinigt, auf die Verbindungstemperatur gebracht und zusammengepresst. Das Press-Fügen besteht in einer gezielten lokalen Verformung unter Einhaltung ganz bestimmter Betriebsparameter. Dabei ist zu beachten, dass die globale Verformung $\varepsilon_g$ der ganzen Bauteile 5 in den für die Erhaltung der gewünschten Gestalt gegebenen Grenzen gehalten wird, während die eigentlichen Fügezonen 6 zu kurzzeitigem, intensiven dynamischen plastischen Fliessen veranlasst werden. Dabei werden die lokale Verformung $\varepsilon_1$ und die lokale Verformungsgeschwindigkeit derart aufeinander abgestimmt, dass ein entsprechend den Abmessungen der Fügezone 6 ausgebildeter ursprünglich feinkörniger Prüfkörper bei Stauchung unter den gleichen Verformungsbedingungen wie beim Fügen der Bauteile 5 nach einer Wärmebehandlung bei Rekristallisationstemperatur unter allen Umständen ein grobkörniges Gefüge ergibt. Dabei muss die Höhe $h_o$ der Fügezone (6) vor dem Verbinden gleich der Höhe der Stauchzone vor dem Stauchen sein. Entsprechendes gilt für die Höhe $h_f$ nach dem Verbinden bzw. Stauchen.

Aus den physikalisch-metallurgischen Bedingungen ergeben sich für die Betriebsparameter $\varepsilon_1$ und $\dot{\varepsilon}_1$, dass für eine gegebene Verformung $\varepsilon_1$ in Abhängigkeit des Werkstoffs der Ausdruck

$$\log (\dot{\varepsilon}\, D_{Ni}^{-1} m^2), \text{ mit}$$

$D_{Ni}$ = Temperaturabhängiger Diffusionskoeffizient von Nickel

in einen wohl definierten Bereich zwischen den Grenzen A und B hineinfallen muss, wobei B im allgemeinen den Wert 20 hat, während A von der Werkstoffzusammensetzung und von $\varepsilon_1$ abhängt, mindestens jedoch den Wert 10 aufweisen soll.

Für eine Werkstoffklasse der Zusammensetzung

Cr = 15 Gew.-%
W = 4,0 Gew.-%
Mo = 2,0 Gew.-%
Al = 4,5 Gew.-%
Ta = 2,0 Gew.-%
C = 0,05 Gew.-%
B = 0,01 Gew.-%
Zr = 0,15 Gew.-%
$Y_2O_3$ = 1,1 Gew.-%
Ni = Rest

soll die Grösse A für Verformungen $\varepsilon_1 \leqslant 0,6$ den Wert 10, für $\varepsilon_1 > 0,6$ den Wert 15,0 aufweisen.

Für eine Werkstoffklasse der Zusammensetzung

Cr = 20 Gew.-%
C = 0,05 Gew.-%
Al = 0,3 Gew.-%
Ti = 0,5 Gew.-%
Fe = 1,0 Gew.-%
$Y_2O_3$ = 1,1 Gew.-%
Ni = Rest

soll die Grösse A für Verformungen $\varepsilon_1 \leqslant 0,6$ den Wert 10, für $\varepsilon_1 > 0,6$ den Wert 14,5 aufweisen.

Das Verfahren ist im allgemeinen durch Mindestwerte von Verformung und Verformungsgeschwindigkeit definiert. Der Mittelwert der lokalen Verformungsgeschwindigkeit $\dot{\varepsilon}_1$ soll mindestens 0,02 s$^{-1}$ die lokale Verformung $\varepsilon_1$ mindestens 0,1, die Verformungszeit $\Delta t$ höchstens 20 s und die Verformungstemperatur zwischen 800°C und 1050°C betragen.

Die globale, auf das ganze Bauteil 5 bezogene Verformung soll - insbesondere bei komplizierten Werkstücken - durch möglichst weitgehende Einspannung in das durch Gesenkoberteil 1 und Gesenkunterteil 2 dargestellte Werkzeug beschränkt werden. Bei komplizierten Bauteilen in Form von konkaven oder hohlen dünnwandigen Körpern, z. B. als Schaufelhalbschalen 11 und 12 wird zwecks Beschränkung der globalen und Steuerung der lokalen Verformung vorteilhafterweise eine Stützmasse oder ein Stützkörper 10 verwendet. Nach dem Fügen wird die Stützmasse 10 auf mechanischem, physikalischem oder chemischem Weg wieder entfernt. Dies kann bei metallischen Stützmassen 10 durch Ausschmelzen oder durch Auslaugen mittels einer die Bauteile 5 nicht angreifenden Lauge, Säure oder Salzlösung geschehen. Letzteres gilt gleichermassen für keramische Stützmassen 10.

Das Verfahren lässt sich insbesondere in vorteilhafter Weise auf Bauteile 5 aus einer oxyddispersionsgehärteten Nickelsuperlegierung mit 15 %, 20 % oder 30 % Cr anwenden.

Die gesamte Zeit eines Arbeitszyklus beim Fügen inklusive Einrichten, Aufheizen, Abkühlen etc. beträgt je nach Werkstückgrösse 10-15-20 min.

Die Vorteile des erfindungsgemässen Press-Fügens liegen in einer beträchtlichen Verkürzung der Zeit eines Arbeitszyklus, in der Beherrschung der physikalisch-metallurgischen Betriebsparameter zur Erzielung optimaler Grobkörnigkeit, der guten Reproduzierbarkeit der Ergebnisse und die entsprechend den tieferen Fügetemperaturen vergleichsweise niedrigeren Werkzeugkosten bzw. erhöhten Standzeiten der Werkzeuge. Ferner kann das Verfahren in vorteilhafter Weise auf komplizierte Formen und komplexe Werkstoffsysteme angewendet werden.

## Patentansprüche

1. Verfahren zum Verbinden von Bauteilen (5) aus einer Superlegierung im festen Zustand unter gleichzeitiger Anwendung von Druck und Wärme, wobei die Oberflächen der zu verbindenden Bauteile (5) mechanisch, chemisch oder elektrolytisch bearbeitet werden, die Bauteile (5) auf die Verbindungstemperatur gebracht und zusammengepresst und nach dem auf diese Weise durchgeführten Press-Fügen abgekühlt und einer weiteren thermischen und/oder thermomechanischen Behandlung unterzogen werden, dadurch gekennzeichnet, dass unter grösstmöglicher Einschränkung der globalen Verformung der ganzen Bauteile (5) deren zu fügende Berührungszonen zu kurzzeitigem, intensiven dynamischen plastischen Fliessen gezwungen werden, dergestalt, dass bezogen auf die Fügezone (6), die lokale Verformung $\varepsilon_1$, die lokale Verformungsgeschwindigkeit $\dot{\varepsilon}_1$ und die Verformungstemperatur derart aufeinander abgestimmt werden, dass ein den Abmessungen der Fügezone (6) entsprechender ursprünglich feinkörniger Prüfkörper, wenn unter den gleichen Verformungsbedingungen gestaucht, nach einer Wärmebehandlung bei der Rekristallisationstemperatur ein grobkörniges Gefüge ergibt, wobei

$$\varepsilon_1 = \left| \ln \frac{h_o}{h_f} \right| \quad \text{mit}$$

$h_o$ = Höhe der Fügezone (6) vor dem Verbinden = Höhe der Stauchzone des Prüfkörpers vor dem Stauchen,

$h_f$ = Höhe der Fügezone (6) nach dem Verbinden = Höhe der Stauchzone des Prüfkörpers nach dem Stauchen.

2. Verfahren zum Verbinden von Bauteilen (5) aus einer Superlegierung im festen Zustand unter gleichzeitiger Anwendung von Druck und Wärme, wobei die Oberflächen der zu verbindenden Bauteile (5) mechanisch, chemisch oder elektrolytisch bearbeitet werden, die Bauteile (5) auf die Verbindungstemperatur gebracht und zusammengepresst und nach dem auf diese Weise durchgeführten Press-Fügen abgekühlt und einer weiteren thermischen und/oder thermomechanischen Behandlung unterzogen werden, dadurch gekennzeichnet, dass unter grösstmöglicher Einschränkung der globalen Verformung der ganzen Bauteile (5) deren zu fügende Berührungszonen zu kurzzeitigem, intensiven dynamischen plastischen Fliessen gezwungen werden, dergestalt, dass bezogen auf die Fügezone (6), die lokale Verformung $\varepsilon_1$ und die lokale Verformungsgeschwindigkeit $\dot{\varepsilon}_1$ derart aufeinander abgestimmt werden, dass für eine gegebene Verformung $\varepsilon_1$ in Abhängigkeit des Werkstoffs der Ausdruck

log $(\dot{\varepsilon}_1 \, D_{Ni}^{-1} \, m^2)$

in den Bereich zwischen den Grenzen A und B hineinfällt, wobei

$$\varepsilon_1 = \left| \ln \frac{h_o}{h_f} \right| \quad ; \quad \dot{\varepsilon}_1 = \frac{d\left[\left| \ln \frac{h_o}{h_f} \right|\right]}{dt} \quad ;$$

$h_o$ = Höhe der Fügezone (6) vor dem Verbinden,

$h_f$ = Höhe der Fügezone (6) nach dem Verbinden,
$D_{Ni}$ = Temperaturabhängiger Diffusionskoeffizient von Nickel,

und dass die Grösse B den Wert 20 hat, wogegen die Grösse A sowohl von $\varepsilon_1$ wie von der Werkstoffzusammensetzung abhängt, mindestens jedoch den Wert 10 aufweist.

3. Verfahren nach Anspruch 2, dadurch gekennzeichnet, dass die zu verbindenden Bauteile (5) aus einem Werkstoff der Zusammensetzung

| | | |
|---|---|---|
| Cr | = | 15 Gew.-% |
| W | = | 4,0 Gew.-% |
| Mo | = | 2,0 Gew.-% |
| Al | = | 4,5 Gew.-% |
| Ti | = | 2,5 Gew.-% |
| Ta | = | 2,0 Gew.-% |
| C | = | 0,05 Gew.-% |
| B | = | 0,01 Gew.-% |
| Zr | = | 0,15 Gew.-% |
| $Y_2O_3$ | = | 1,1 Gew.-% |
| Ni | = | Rest |

bestehen und dass die Grösse A für $\varepsilon_1 \leqslant 0,6$ den Wert 10 und für $\varepsilon_1 > 0,6$ den Wert 15,0 aufweist.

4. Verfahren nach Anspruch 2, dadurch gekennzeichnet, dass die zu verbindenden Bauteile (5) aus einem Werkstoff der Zusammensetzung

| | | |
|---|---|---|
| Cr | = | 20 Gew.-% |
| C | = | 0,05 Gew.-% |
| Al | = | 0,3 Gew.-% |
| Ti | = | 0,5 Gew.-% |
| Fe | = | 1,0 Gew.-% |
| $Y_2O_3$ | = | 1,0 Gew.-% |
| Ni | = | Rest |

bestehen und dass die Grösse A für $\varepsilon_1 \leqslant 0,6$ den Wert 10 und für $\varepsilon_1 > 0,6$ den Wert 14,5 aufweist.

5. Verfahren zum Verbinden von Bauteilen (5) aus einer Superlegierung im festen Zustand unter gleichzeitiger Anwendung von Druck und Wärme, wobei die Oberflächen der zu verbindenden Bauteile (5) mechanisch, chemisch oder elektrolytisch bearbeitet werden, die Bauteile (5) auf die Verbindungstemperatur gebracht und zusammengepresst und nach dem auf diese Weise durchgeführten Press-Fügen abgekühlt und einer weiteren thermischen und/oder thermomechanischen Behandlung unterzogen werden, dadurch gekennzeichnet, dass unter grösstmöglicher Einschränkung der globalen Verformung der ganzen Bauteile (5) deren zu fügende Berührungszonen zu kurzzeitigem, intensiven dynamischen plastischen Fliessen gezwungen werden, dergestalt, dass die Verformungstemperatur zwischen 800°C und 1050°C liegt und dass bezogen auf die Fügezone (6), der Mittelwert der lokalen Verformungsgeschwindigkeit $\dot{\varepsilon}_1$ mindestens 0,02 s$^{-1}$, die lokale Verformung $\varepsilon_1$ mindestens 0,1 und die Verformungszeit $\Delta t$ höchstens 20 s beträgt, wobei

$$\varepsilon_1 = \left| \ln \frac{h_o}{h_f} \right|$$

$h_o$ = Höhe der Fügezone vor dem Verbinden,
$h_f$ = Höhe der Fügezone nach dem Verbinden.

6. Verfahren nach einem der Ansprüche 1, 2 oder 5, dadurch gekennzeichnet, dass die globale auf das ganze Bauteil (5) bezogene Verformung durch möglichst weitreichende Einspannung in das Werkzeug (1, 2) beschränkt wird.

7. Verfahren nach einem der Ansprüche 1, 2 oder 5, dadadurch gekennzeichnet, dass mindestens eines der zu verbindenden Bauteile (5) aus einem konkaven oder hohlen, dünnwandigen Körper (11, 12) besteht und dass mindestens ein Teil der gesamthaft vorhandenen Hohlräume der Bauteile (5) durch eine zuvor eingebrachte Stützmasse (10) oder einen Stützkörper (10) ausgefüllt wird und dass die besagte Stützmasse (10) nach dem Schritt der Verbindung und der Abkühlung auf mechanischem, physikalischem oder chemischem Weg wieder entfernt wird.

8. Verfahren nach Anspruch 7, dadurch gekennzeichnet, dass als Stützmasse (10) ein Metall oder eine Legierung verwendet wird, dessen Schmelzpunkt zwischen der Verbindungstemperatur und der Solidustemperatur der zu verbindenden Bauteile (5) liegt und dass ihre Entfernung durch Ausschmelzen bewerkstelligt wird.

9. Verfahren nach Anspruch 7, dadurch gekennzeichnet, dass als Stützmasse (10) ein Metall, eine Legierung oder ein keramischer Stoff verwendet wird und dass ihre Entfernung durch Auslaugen mittels einer die Bauteile (5) nicht angreifenden Lauge, Säure oder Salzlösung bewerkstelligt wird.

10. Verfahren nach einem der Ansprüche 1, 2 oder 5, dadurch gekennzeichnet, dass die zu verbindenden Bauteile (5) aus einer oxyddispersionsgehärteten Nickelsuperlegierung mit 15 % Cr-Gehalt bestehen.

11. Verfahren nach einem der Ansprüche 1, 2 oder 5, dadurch gekennzeichnet, dass die zu verbindenden Bauteile (5) aus einer oxyddispersionsgehärteten Nickelsuperlegierung mit 20 % Cr-Gehalt bestehen.

12. Verfahren nach einem der Ansprüche 1, 2 oder 5, dadurch gekennzeichnet, dass die zu verbindenden Bauteile (5) aus einer oxyddispersionsgehärteten Nickelsuperlegierung mit 30 % Cr-Gehalt bestehen.

## Claims

1. Method for joining structural members (5) composed of a superalloy in the solid state using pressure and heat simultaneously, in which the surfaces of the structural members (5) to be joined are processed mechanically, chemically or electrolytically, the structural members (5) are brought to the joining temperature and pressed together and cooled down after the press joining carried out in this manner and subjected to a further thermal and/or thermomechanical treatment, characterized in that, with the greatest possible limitation of the overall deformation of the complete structural members (5), their contact zones to be joined are forced to undergo a brief, intense dynamic plastic flow in a manner such that, referred to the joint zone (6), the local deformation $\varepsilon_1$, the local deformation rate $\dot{\varepsilon}_1$ and the deformation temperature are matched to each other in a manner such that, if upset under the same deformation conditions, an originally fine-grain test body corresponding to the dimensions of the joint zone (6) yields a coarse-grain structure after a heat treatment at the recrystallization temperature, where

$$\log \left( \dot{\varepsilon}_1 \ D_{Ni}^{-1} \ m^2 \right)$$

$h_o$ = height of the joint zone (6) before joining = height of the upset zone of the test body before upsetting,

$h_f$ = height of the joint zone (6) after joining = height of the upset zone of the test body after upsetting.

2. Method for joining structural members (5) composed of a superalloy in the solid state using pressure and heat simultaneously, in which the surfaces of the structural members (5) to be joined are processed mechanically, chemically or electrolytically, the structural members (5) are brought to the joining temperature and pressed together and cooled down after the press joining carried out in this manner and subjected to a further thermal and/or thermomechanical treatment, characterized in that, with the greatest possible limitation of the overall deformation of the complete structural members (5), their contact zones to be joined are forced to undergo a brief, intense dynamic plastic flow in a manner such that, referred to the joint zone (6), the local deformation $\varepsilon_1$ and the local deformation rate $\dot{\varepsilon}_1$ are matched to each other in a manner such that, for a given deformation $\varepsilon_1$, the expression

$\log \left( \dot{\varepsilon}_1 \ D_{Ni}^{-1} \ m^2 \right)$

falls, depending on the material, between the limits A and V, where

$$\mathcal{E}_1 = \left| \ln \frac{h_o}{h_f} \right| \, ,$$

$h_o$ = height of the joint zone (6) before joining,
$h_f$ = height of the joint zone (6) after joining,
$D_{Ni}$ = temperature-dependent diffusion coefficient of nickel,

and that the parameter B has the value 20 while the parameter A depends both on $\varepsilon_1$, and on the material composition, but has at least the value 10.

3. Method according to Claim 2, characterized in that the structural members (5) to be joined are composed of a material of the composition

Cr = 15 % by weight
W = 4.0 % by weight
Mo = 2.0 % by weight
Al = 4.5 % by weight
Ti = 2.5 % by weight
Ta = 2.0 % by weight
C = 0.05 % by weight
B = 0.01 % by weight
Zr = 0.15 % by weight
$Y_2O_3$ = 1.1 % by weight
Ni = remainder,

and that the parameter A has the value 10 for $\varepsilon_1 \leqslant 0.6$ and the value 15.0 for $\varepsilon_1 > 0.6$.

4. Method according to Claim 2, characterized in that the structural members (5) to be joined are composed of a material of the composition

Cr = 20 % by weight
C = 0.05 % by weight
Al = 0.3 % by weight
Ti = 0.5 % by weight
Fe = 1.0 % by weight
$Y_2O_3$ = 1.0 % by weight
Ni = remainder

and that the parameter A has the value 10 for $\varepsilon_1 \leqslant 0.6$ and the value 14.5 for $\varepsilon_1 > 0.6$.

5. Method for joining structural members (5) composed of a superalloy in the solid state using pressure and heat simultaneously, in which the surfaces of the structural members (5) to be joined are processed mechanically, chemically or electrolytically, the structural members (5) are brought to the joining temperature and pressed together and cooled down after the press joining carried out in this manner and subjected to a further thermal and/or thermomechanical treatment, characterized in that, with the greatest possible limitation of the overall deformation of the complete structural members (5), their contact zones to be joined are forced to undergo brief, intense dynamic plastic flow in a manner such that the deformation temperature is between 800°C and 1050°C and that, referred to the joint zone (6), the mean value of the local deformation rate $\dot{\varepsilon}_1$ is at least 0.02 s⁻¹, the local deformation $\varepsilon_1$ is at least 0.1 and the deformation time $\Delta t$ is at most 20 s, where

$$\mathcal{E}_1 = \left| \ln \frac{h_o}{h_f} \right| \; ; \qquad \dot{\mathcal{E}}_1 = \frac{d\left[ \left| \ln \frac{h_o}{h_f} \right| \right]}{dt} \; ;$$

$h_o$ = height of the joint zone before joining,
$h_f$ = height of the joint zone after joining.

6. Method according to one of Claims 1, 2 or 5, characterized in that the overall deformation referred to the complete structural member (5) is limited by as extensive clamping in the tool (1, 2) as possible.

7. Method according to one of Claims 1, 2 or 5, characterized in that at least one of the structural members

12

(5) to be joined is composed of a concave or hollow, thin-walled body (11, 12) and in that at least one part of the cavities, present in total, of the structural members (5) is filled with a supporting material (10) or a supporting body (10) introduced beforehand and in that the said supporting material (10) is removed again by mechanical, physical or chemical means after the joining and cooling-down step.

8. Method according to Claim 7, characterized in that a metal or an alloy whose melting point is between the joining temperature and the solidus temperature of the structural members (5) to be joined is used as supporting material (10) and that its removal is achieved by melting.

9. Method according to Claim 7, characterized in that a metal, an alloy or a ceramic material is used as supporting material (10) and in that its removal is achieved by leaching out by means of an alkali, acid or salt solution which does not attack the structural members (5).

10. Method according to one of Claims 1, 2 or 5, characterized in that the structural members (5) to be joined are composed of an oxide-dispersion-hardened nickel superalloy containing 15 % Cr.

11. Method according to one of Claims 1, 2 or 5, characterized in that the structural members (5) to be joined are composed of an oxide-dispersion-hardened nickel superalloy containing 20 % Cr.

12. Method according to one of Claims 1, 2 or 5, characterized in that the structural members (5) to be joined are composed of an oxide-dispersion-hardened nickel superalloy containing 30 % Cr.

**Revendications**

1. Procédé pour assembler des éléments de construction (5) en superalliage à l'état solide avec application simultanée de pression et de chaleur, dans lequel les surfaces des éléments de construction (5) à assembler sont façonnées par voie mécanique, chimique ou électrolytique, les éléments de construction (5) sont portés à la température d'assemblage et assemblés par pressage et, après l'assemblage par pressage ainsi réalisé, refroidis et soumis à un traitement thermique et/ou thermomécanique supplémentaire, caractérisé en ce que, tout en limitant autant que possible la déformation globale de l'ensemble des éléments de construction (5), leurs zones de contact à relier sont soumises de force à un écoulement plastique dynamique intensif, de courte durée, de telle façon que, rapportées à la zone de liaison (6), la déformation locale $\varepsilon_1$, la vitesse de déformation locale $\dot{\varepsilon}_1$ et la température de déformation sont liées l'une à l'autre de manière telle qu'une éprouvette d'essai, initialement à grain fin et correspondant aux dimensions de la zone de liaison (6), acquiert une structure à gros grain après un traitement thermique à la température de recristallisation, si elle a été refoulée dans les mêmes conditions de déformation, avec

$$\varepsilon_1 = \left| \ln \frac{h_o}{h_f} \right|$$

où:

$h_o$ = hauteur de la zone de liaison (6) avant l'assemblage = hauteur de la zone de refoulement de l'éprouvette d'essai avant le refoulement;

$h_f$ = hauteur de la zone de liaison (6) après l'assemblage = hauteur de la zone de refoulement de l'éprouvette d'essai après le refoulement.

2. Procédé pour assembler des éléments de construction (5) en superalliage à l'état solide avec application simultanée de pression et de chaleur, dans lequel les surfaces des éléments de construction (5) à assembler sont façonnées par voie mécanique, chimique ou électrolytique, les éléments de construction (5) sont portés à la température d'assemblage et assemblés par pressage et, après l'assemblage par pressage ainsi réalisé, refroidis et soumis à un traitement thermique et/ou thermomécanique supplémentaire, caractérisé en ce que, tout en limitant autant que possible la déformation globale de l'ensemble des éléments de construction (5), leurs zones de contact à relier sont soumises de force à un écoulement plastique dynamique intensif, de courte durée, de telle façon que, rapportées à la zone de liaison (6), la déformation locale $\varepsilon_1$ et la vitesse de déformation locale $\dot{\varepsilon}_1$ sont liées l'une à l'autre de manière telle que pour une déformation $\varepsilon_1$, donnée, l'expression

$\log (\dot{\varepsilon}_1 \, D_{Ni}^{-1} \, m^2)$

tombe, en fonction du matériau, dans le domaine compris entre A et B, avec

$$\varepsilon_1 = \left| \ln \frac{h_o}{h_f} \right|$$

où:

$h_o$ = hauteur de la zone de liaison (6) avant l'assemblage,

$h_f$ = hauteur de la zone de liaison (6) après l'assemblage,

$D_{Ni}$ = coefficient de diffusion du nickel, dépendant de la température,

et que la grandeur B a la valeur 20, tandis que la grandeur A dépend aussi bien de $\varepsilon_1$ que de la composition du matériau, mais présente cependant au moins la valeur 10.

3. Procédé suivant la revendication 2, caractérisé en ce que les éléments de construction (5) à assembler sont constitués d'un matériau composé, en poids, de

| | | |
|---|---|---|
| Cr | = | 15 % |
| W | = | 4,0 % |
| Mo | = | 2,0 % |
| Al | = | 4,5 % |
| Ti | = | 2,5 % |
| Ta | = | 2,0 % |
| C | = | 0,05 % |
| B | = | 0,01 % |
| Zr | = | 0,15 % |
| $Y_2O_3$ | = | 1,1 % |
| Ni | = | Reste, |

et en ce que la grandeur A présente la valeur 10 pour $\varepsilon_1 \leqslant 0,6$ et la valeur 15,0 pour $\varepsilon_1 > 0,6$.

4. Procédé suivant la revendication 2, caractérisé en ce que les éléments de construction (5) à assembler sont constitués d'un matériau composé, en poids, de

| | | |
|---|---|---|
| Cr | = | 20 % |
| C | = | 0,05 % |
| Al | = | 0,3 % |
| Ti | = | 0,5 % |
| Fe | = | 1,0 % |
| $Y_2O_3$ | = | 1,0 % |
| Ni | = | Reste, |

et en ce que la grandeur A présente la valeur 10 pour $\varepsilon_1 \leqslant 0,6$ et la valeur 14,5 pour $\varepsilon_1 > 0,6$.

5. Procédé pour assembler des éléments de construction (5) en superalliage à l'état solide avec application simultanée de pression et de chaleur, dans lequel les surfaces des éléments de construction (5) à assembler sont façonnées par voie mécanique, chimique ou électrolytique, les éléments de construction (5) sont portés à la température d'assemblage et assemblés par pressage et, après l'assemblage par pressage ainsi réalisé, refroidis et soumis à un traitement thermique et/ou thermomécanique supplémentaire, caractérisé en ce que, tout en limitant autant que possible la déformation globale de l'ensemble des éléments de construction (5), leurs zones de contact à relier sont soumises de force à un écoulement plastique dynamique intensif, de courte durée, de telle façon que la température de déformation est située entre 800°c et 1050°C et que, rapportés à la zone de liaison (6), la valeur moyenne de la vitesse de déformation locale $\dot{\varepsilon}_1$ vaut au moins 0,02 s$^{-1}$, la déformation locale $\varepsilon_1$ vaut au moins 0,1 et le temps de déformation $\Delta t$ vaut au moins 20 s, avec

$$\varepsilon_1 = \left| \ln \frac{h_o}{h_f} \right| \quad ; \quad \dot{\varepsilon}_1 = \frac{d\left[ \left| \ln \frac{h_o}{h_f} \right| \right]}{dt}$$

où

$h_o$ = hauteur de la zone de liaison avant l'assemblage,

$h_f$ = hauteur de la zone de liaison après l'assemblage.

6. Procédé suivant l'une ou l'autre des revendications 1, 2 ou 5, caractérisé en ce que la déformation globale, rapportée à l'élément de construction (5) total, est limitée par un encastrement aussi long que possible dans l'outil (1, 2).

7. Procédé suivant l'une ou l'autre des revendications 1, 2 ou 5, caractérisé en ce qu'au moins un des éléments de construction (5) à assembler se compose d'un corps (11, 12) à paroi mince, concave ou creux, en ce qu'au moins une partie des cavités présentes dans l'ensemble des éléments de construction (5) est remplie par une masse d'appui (10) préalablement appliquée ou par un corps d'appui (10) et en ce que ladite masse d'appui (10) est de nouveau enlevée par voie mécanique, physique ou chimique après les étapes d'assemblage et de refroidissement.

8. Procédé suivant la revendication 7, caractérisé en ce qu'en guise de masse d'appui (10), on utilise un métal ou un alliage dont le point de fusion est compris entre la température d'assemblage et la température de solidus des éléments de construction (5) à assembler et en ce que son enlèvement est réalisé par fusion.

9. Procédé suivant la revendication 7, caractérisé en ce qu'en guise de masse d'appui (10), on utilise un métal, un alliage ou un matériau céramique et en ce que son enlèvement est réalisé par dissolution au moyen d'une solution alcaline, d'un acide ou d'une solution de sels, qui n'attaque pas les éléments de construction (5).

10. Procédé suivant l'une ou l'autre des revendications 1, 2 ou 5, caractérisé en ce que les éléments de construction (5) à assembler se composent d'un superalliage de nickel contenant 15 % Cr, durci par dispersion d'oxydes.

11. Procédé suivant l'une ou l'autre des revendications 1, 2 ou 5, caractérisé en ce que les éléments de construction (5) à assembler se composent d'un superalliage de nickel contenant 20 % Cr, durci par dispersion d'oxydes.

12. Procédé suivant l'une ou l'autre des revendications 1, 2 ou 5, caractérisé en ce que les éléments de construction (5) à assembler se composent d'un superalliage de nickel contenant 30 % Cr, durci par dispersion d'oxydes.

FIG.1

FIG. 2

$t = $  0  0,5  1  s

0 192 100

FIG. 3

FIG. 4

FIG.5

FIG. 6

## FIG. 7

## FIG. 8